(19) **Europäisches Patentamt**
**European Patent Office**
**Office européen des brevets**

(11) **EP 3 242 563 B1**

(12) **EUROPEAN PATENT SPECIFICATION**

(45) Date of publication and mention
of the grant of the patent:
**17.07.2024   Bulletin 2024/29**

(21) Application number: **16700393.8**

(22) Date of filing: **06.01.2016**

(51) International Patent Classification (IPC):
*A23L 5/00* *(2016.01)*       *A23L 11/00* *(2021.01)*
*A23L 19/00* *(2016.01)*      *A23L 19/12* *(2016.01)*
*A23L 13/50* *(2016.01)*      *A23L 13/60* *(2016.01)*
*A23L 15/00* *(2016.01)*      *A23L 17/00* *(2016.01)*
*A23J 3/26* *(2006.01)*        *A21D 13/00* *(2017.01)*
*A23L 33/00* *(2016.01)*

(52) Cooperative Patent Classification (CPC):
(C-Sets available)
**A23P 30/40; A23J 3/26; A23L 11/05; A23L 13/52;
A23L 13/60; A23L 15/00; A23L 17/70; A23L 19/09;
A23L 19/13; A23L 33/10; A23P 30/32;**
A23C 2210/30; A23V 2002/00                    (Cont.)

(86) International application number:
**PCT/EP2016/050137**

(87) International publication number:
**WO 2016/110513 (14.07.2016 Gazette 2016/28)**

(54) **METHOD FOR OBTAINING FOOD AND/OR NUTRACEUTICAL PRODUCT OF THE SPONGE CAKE TYPE FROM FOOD PRODUCTS**

VERFAHREN ZUR HERSTELLUNG VON LEBENSMITTELN UND/ODER NUTRAZEUTISCHEN GESCHÄUMTEN PRODUKTEN AUS NAHRUNGSMITTELN

PROCÉDÉ D'OBTENTION D'UN PRODUIT NUTRACEUTIQUE ET/OU ALIMENTAIRE DU TYPE BISCUIT DE SAVOIE À PARTIR D'ALIMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **06.01.2015   FR 1550075**

(43) Date of publication of application:
**15.11.2017   Bulletin 2017/46**

(73) Proprietor: **NBread-Process
41700 Contres (FR)**

(72) Inventors:
• **DESJARDINS-LAVISSE, Isabelle
18250 Henrichemont (FR)**
• **PAURD, Olivier
41000 Blois (FR)**

• **GILLET, Guillaume
18000 Bourges (FR)**

(74) Representative: **Boüan du Chef du Bos,
Louis-Paterne
Cabinet Bouan
34, rue de Bagneaux
45140 Saint Jean de la Ruelle (FR)**

(56) References cited:
**EP-A2- 0 371 725       WO-A1-01/47379
WO-A1-2013/110508    AT-B- 394 483
US-A- 5 229 157         US-A1- 2013 071 491
US-A1- 2013 216 689**

• **DATABASE GNPD [online] MINTEL; April 2010
(2010-04-01), ANONYMOUS: "GREEN OLIVE
MOUSSE", XP002742886, retrieved from
WWW.GNPD.COM Database accession no.
1311915**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **DATABASE GNPD [online] MINTEL; January 2012 (2012-01-01), ANONYMOUS: "SALMON MOUSSE WITH CHIVE CREAM", XP002742887, retrieved from WWW.GNPD.COM Database accession no. 1707275**

(52) Cooperative Patent Classification (CPC): (Cont.)

C-Sets
A23V 2002/00, A23V 2250/5022, A23V 2250/5024, A23V 2250/5054, A23V 2250/5072, A23V 2250/5428, A23V 2300/04, A23V 2300/16

## Description

## TECHNICAL FIELD OF THE INVENTION

The invention relates to the field of food products, particularly of a method of texturing food and/or nutraceutical products of the "sponge cake" or "solid foam" type, made from all foods (unprocessed foods, food co-products or prepared or cooked food products).

## PRIOR ART

The food processing industry is continuously seeking new types of products to satisfy increasingly sophisticated consumer requirements. To this end, over the past few years a type of cuisine called "molecular" cuisine has appeared that plays with the textures and physicochemical properties of foods to offer new products to consumers, particularly in the form of solid foams from various food products.

Top chefs are constantly searching for new products, particularly a "sponge cake" or " solid foam " type food product of very low density (less than $0.400g/cm^3$), that can be used as a support for culinary preparations.

It is now known that starch alone or coupled with egg whites or vegetable oils or flour enables food products of the "sponge cake" or "solid foam" type to be developed from a liquid or pasty preparation.

For example, document FR2360264 may be cited, that describes a method of preparing food product foams by incorporating beaten egg whites and starch into a hot preparation (70 to 80°C).

Document US5229157, discloses a method consisting of mixing a starchy vegetable, such as potato, with vegetable oil and egg white. Seasoning and other vegetables or "fatty" sauces such as béchamel may possibly be added for matters of taste. However, such a method does not enable products containing less than 5% starch and less than 5% liquid oil to be made.

In addition, adding starch does not enable a very light finished product that is suitable for use as a support to be obtained. Food products of the foam or sponge cake type obtained by these methods generally present a slightly spongy texture and present a density from 0.750 to 0.880 $g/cm^3$, according to the examples proposed.

Also, today food waste represents more than 200 kg of material per inhabitant per year in France. In Europe, wastage still represents up to 280 kg of material per person per year, including 190 kg at the food processing product producer, manufacturer and sales point levels. These numbers can, in particular, be reduced by the possibility of transforming, directly at the sales point level, products whose expiration date has almost been reached or products that are no longer "presentable" to consumers (overripe, nearly-black bananas, for example).

In addition, the use of co-products, today ignored because they are not integrated into any recycling processes, also enables waste from the food processing industry to be limited.

Therefore, there is a need for a new method of texturing food or biodegradable products of the "sponge cake" or "solid foam" type, made from all types of foods and presenting a density of less than $0.400g/cm^3$. In particular, said method transforms unprocessed foods but also cooked meals and many co-products, such as peelings and groundnut cake, and also products at a stage where they are considered waste such as overripe fruits and vegetables.

## DISCLOSURE OF THE INVENTION

The invention aims to propose a method consisting of a new method for texturing food products of the "sponge cake" or "solid foam" type, comprising at least:

(a). A transformation by controlled grinding of a preparation of at least one food, able to preserve the desired organoleptic properties, able to obtain a ground material,

(b). Addition of a molecule with an inactive structure to said ground material to obtain a mixture,

(c). Pressurization of the mixture obtained in step (b) by the incorporation of dissolved gas into said mixture.

(d). Mechanical expansion obtained by reducing the pressure of the mixture obtained in step (b),

(e). Activation of the structure molecule,

Characterized in that the mechanical expansion is achieved by reducing the pressure by at least 6 bar, preferably between 6 and 20 bar, preferably between 10 and 18 bar. The present invention is as defined by the appended claims.

"Product of the sponge cake or solid foam type" is understood to refer to a solid product having an internal, soft honeycomb structure, with a density of less than $0.4g/cm^3$, similar to the soft inner part of bread, that can be spread with a product, sliced, assembled or grilled, without being compared to bread in terms of composition or preparation method.

"Food" is understood to refer to any unprocessed foods, food co-products or prepared or cooked food products.

"Transformation by controlled grinding" is understood to refer to any transformation able to make a food or a mixture of foods, in the form of a paste or liquid. This transformation can be done, in particular, by grinding, cutting, blending, mixing or dilution. In addition, if desired, bits of food can be introduced in order to give "crunchiness" to the texture of the product according to the invention.

In addition, before and/or during the transformation step, additional molecules can be added to the foods in order to enrich the food product from the method, thereby enabling a dietetic and/or nutraceutical product to be obtained. Such molecules can be proteins, vitamins, trace elements, fiber, fatty acids, antioxidants, probiotics, medications or any other molecules of interest known by the person skilled in the art.

"Structure molecule" is understood to refer to any molecule, protein, peptide, alone or in the form of a complex, amalgamation or mixture, able to produce a structured network within said mixture in order to set it in its shape, definitively or temporarily, under the action of an activation or a stimulus, of a physical or chemical nature.

Preferably, the total quantity of structure molecule in said mixture is between 0.1 and 10% total weight of the mixture, preferably less than 5%, more preferentially less than 2%.

"Activation of the structure molecule" is understood to refer to any physical or chemical phenomenon capable of structuring structure molecules to each other, so as to form a network capable of setting the mixture in its shape. Said activation can be, in particular, thermal, ionic and/or any other type known to the person skilled in the art.

The structure molecule is chosen from among the group comprising the following constituents: Egg white, albumin, ovalbumin, agar, pectin, gellan, carob gum or a mixture of at least two of said constituents. The structure molecule is notably different from yeasts traditionally used, for example in bread making processes.

"Gas" is understood to refer to any existing gas or gas mixture including air, able to put said mixture under pressure; an inert gas, i.e., a gas not reacting with the constituents of said mixture is preferably used.

Advantageously, said gas is chosen from among the group comprising: $N_2O$, $N_2$, $CO_2$, or a mixture of at least two of said gases. Dinitrogen ($N_2$) is preferably used to prevent any interaction between the gas and said mixture; dinitrogen oxide ($N_2O$) is used for its emulsifying properties; Carbon dioxide ($CO_2$) is used when it is necessary to acidify said mixture.

The activation of the structure molecule is a thermal activation able to obtain a core temperature of said mixture of between 60°C and 150°C, preferably between 80°C and 100°C. The structure molecule is activated for less than 5 minutes, or less than one minute, or even less than 30 seconds. More generally, activation of the structure molecule does not intend to "cook" the mixture, unlike known methods in which a step of cooking the mixture is necessary to obtain texturing and/or expansion of the food product.

Advantageously, the thermal activation is achieved by microwaves or infrared radiation.

According to the invention, the ground material obtained in said transformation (a), is a liquid or a paste having a particle size of less than 5 mm.

According to another characteristic of the invention, a dehydration step is performed after step (e) of activating the structure molecule, to obtain a crusty texture.

Such a dehydration step can be done in particular by cooking, water evaporation, or moisture capture methods, for example by zeodration or lyophilization.

The food product of the " sponge cake " or " solid foam " type comprising ground material from at least one food and at least one structure molecule other than starch is characterized in that its density is less than $0.4g/cm^3$, or less than $0.3g/cm^3$, or even less than $0.2g/cm^3$.

In other words, in the case where the food used inherently comprises starch, it is not used as a structure molecule. Therefore, unlike known methods, starch is not necessary to obtain satisfactory texturing and/or expansion of the product obtained according to the invention.

Preferably, said food product of the "sponge cake" or "solid foam" type is obtained by an embodiment of the method according to the invention described in the present.

In addition, for particular formulations, said food product obtained can be dissolved in a liquid, such as hot water for preparing drinks, such as soups, broths or other drinks.

## BRIEF DESCRIPTION OF THE FIGURES

Other characteristics, details and advantages of the invention will emerge upon reading the following description, with reference to the attached figures, that illustrate:

- Figure 1 represents a flow diagram of the method according to the invention;

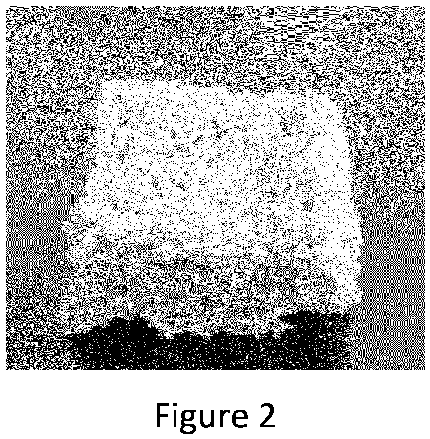

- Figure 2, a photograph of a product obtained according to the method of the invention.

## DESCRIPTION OF PREFERRED EMBODIMENTS

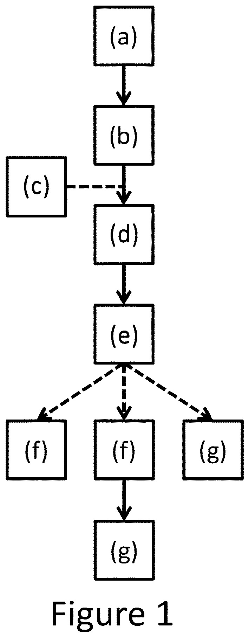

Figure 1 illustrates an overview of the method according to an embodiment of the invention detailing seven steps.

In a first step (a), the foods undergo a transformation that may indifferently and non-exhaustively consist of slicing, blending, mixing, grinding, seasoning and dilution, all of these operations can be combined easily so as to obtain a preparation with the desired organoleptic properties and a particle size of less than 5 mm.

In a second step (b), a structure molecule, or a combination of such molecules, is added to the preparation, the role of which is to form a network suitable for maintaining the product issued from the method in solid form. The molecules used are preferentially proteins. The total quantity of these molecules does not exceed 10% and is preferentially less than 2%, such that the final product is composed of at least 98% of the preparation issued from step (a).

In a third step (d), the product is mechanically expanded by reducing the pressure of its environment. This pressure reduction may be carried out by depressurization of the product to a lower pressure, for example zero pressure. In addition, it is possible during this step to include, and possibly to combine, extrusion, molding, or batching operations and any other process that could, in particular, shape the product. The effect of this step is to lead to a very significant expansion of the product, such that the apparent density is consequently less than 0.4 g/cm$^3$.

In a fourth step (e), the structure molecules added to the product in step (b) are activated. The activation is preferentially thermal and still more preferentially obtained by rapid heating of water molecules in the product generated by exposure of the product to a microwave or infrared beam. The activation may also be chemical by adding another compound, in a very low proportion.

In step (c), preceding step (d), the preparation is put under pressure by incorporating gas into the mixture. The pressurization is preferentially done by injection of a gas, preferably a food gas, such as dinitrogen, dinitrogen oxide or carbon dioxide. It is of course possible to use any other gas or combination of gases. More preferentially, dinitrogen oxide is used for its emulsifying properties; dinitrogen for cost savings and the neutrality of this gas; Carbon dioxide for acidifying the medium. Step (d) is then carried out by returning to the atmospheric or initial pressure.

Once step (e) is done, an optional step (f) can be undertaken. In this step (f), the product may be dried, such that the soft texture obtained after activating the structure molecule is transformed into a crusty texture. This drying occurs by dehydrating the product, which can be done using cooking, water evaporation or moisture capture processes, for example by zeodration or lyophilization or any other dehydration method known to the person skilled in the art.

In an optional step (g), by replacing step (f) or after step (f), the product can be packaged easily and according to the form of consumption, distribution chain or any other constraint to take into consideration for selling and properly using the product. It may possibly be frozen and thawed without undergoing notable modifications in texture.

Such a method is easily carried out and does not require heavy installation. Advantageously, such a method can be used quickly and simply at the restaurant outlet level and more specifically can be set up in "snacking" establishments (fast food takeout restaurants).

Such a method enables a divisible and grippable food product to be obtained, which is a major innovation in the food texturation trend. In fact, thanks to the method according to the invention, it is now possible to eat beef stew or cream of pumpkin soup for example, by hand without utensils.

The examples below are not intended to be exhaustive and intend to show the scope of the field of application of the invention. In fact, the invention deals with typologies of raw materials and quite varied preparations. In particular, very good products, in regards to both their shape and their organoleptic properties, are obtained from food processing co-products or "waste," such as, for example, cakes from oil extraction and overripe fruits and vegetables. All the products obtained present a density of less than 0.4g/cm$^3$, which gives them a very light and melt-in-the-mouth texture.

The density values of the various products obtained in the different examples have been measured according to the following protocol:

- Measuring the mass of the finished product obtained in the example by using a balance accurate to 1 mg,
- Measuring the exact dimensions of the product using a sliding caliper (accuracy 0.1 mm),
- Calculating the density according to the following equation:

$$d = \frac{m_{produit}}{V_{produit}}$$

With $d$ the density, $m_{product}$ the mass of the product and $V_{product}$ the volume of the product

## EXAMPLE 1: FORMULATION FROM GROUNDNUT CAKES RESULTING IN A PRODUCT ACCORDING TO THE INVENTION

### Preparation with egg white as the structure molecule

The preparation is made by mixing the following ingredients:

- 200 g of crushed groundnut cake, such that the particle size is less than 4 mm ;
- 280 g water;
- 15 g powdered egg white or 3.125% total weight of the mixture.

The preparation is then placed in a chamber and subjected to a pressure of 18 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then subjected to a 750-W microwave beam for 25 seconds.

The product obtained is then unmolded and presents an average apparent density of 0.227g/cm$^3$ and a soft mouthfeel, similar to that of the soft inner part of white bread. However, it presents crunchiness due to the relatively high particle size of the starting preparation.

### Preparation with agar as the structure molecule

The preparation is made by mixing the following ingredients:

- 200 g of crushed groundnut cake, such that the particle size is less than 4 mm ;
- 240 g water;
- 2 g powdered agar or 0.45% total weight of the mixture.

The preparation is then placed in a chamber and subjected to a pressure of 18 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then placed in a convection oven for 7 minutes at 150°C.

The product obtained is then unmolded and presents an average apparent density of 0.385g/cm$^3$ and a soft mouthfeel, similar to that of the soft inner part of white bread. However, it presents crunchiness due to the relatively high particle size of the starting preparation.

## EXAMPLE 2: FORMULATION FROM GROUNDNUT CAKES RESULTING IN A NON-COMPLIANT PRODUCT

Preparation according to patent FR2360264 (incorporating beaten egg white)

The preparation is made by mixing the following ingredients:

- 200 g of crushed groundnut cake, such that the particle size is less than 4 mm ;
- 280 g water.

A relatively fluid paste is thus obtained. Separately, 65 g of liquid egg white is beaten until firm. The egg whites are then incorporated into the previously-obtained paste, heated to 94°C, such that the egg whites are cooked during the incorporation. Once a homogeneous preparation is obtained, the preparation is distributed into cubic molds (HxLxW = 50x50x50mm).

The product obtained is then unmolded and presents an average apparent density of 0.933g/cm$^3$. The texture is spongy rather than soft. It is more compact and heavier than products obtained according to the method of the invention.

Preparation without pressurization

The preparation is made by mixing the following ingredients:

- 200 g of crushed groundnut cake, such that the particle size is less than 4 mm ;
- 280 g water;
- 15 g powdered egg white or 3.125% total weight of the mixture.

The preparation is distributed into cubic molds (HxLxW = 50x50x50 mm), at atmospheric pressure, such that they are filled 2/3 of their volume. The molds are then subjected to a 750-W microwave beam for 40 seconds.

The product obtained is then unmolded and presents an average apparent density of 0.853g/cm3 and a mouthfeel similar to that of a very gelled custard.

Preparation with pressurization of 2 bar

The preparation is made by mixing the following ingredients:

- 200 g of crushed groundnut cake, such that the particle size is less than 4 mm ;
- 280 g water;
- 15 g powdered egg white or 3.125% total weight of the mixture.

The preparation is then placed in a chamber and subjected to a pressure of 2 bar of nitrogen. The pressure is maintained for 10 minutes, then the product is extruded into cubic molds (HxLxW = 50x50x50 mm), at atmospheric pressure, such that they are filled 2/3 of their volume. The molds are then subjected to a 900-W microwave beam for 30 seconds.

The product obtained is then unmolded and presents an average apparent density of 0.733g/cm3 and a mouthfeel similar to that of gelled custard.

Preparation with pressurization of 4 bar

The preparation is made by mixing the following ingredients:

- 200 g of crushed groundnut cake, such that the particle size is less than 4 mm ;
- 280 g water;
- 15 g powdered egg white or 3.125% total weight of the mixture.

The preparation is then placed in a chamber and subjected to a pressure of 4 bar of nitrogen. The pressure is maintained for 10 minutes, then the product is extruded into cubic molds (HxLxW = 50x50x50 mm), at atmospheric pressure, such that they are filled 2/3 of their volume. The molds are then subjected to a 900-W microwave beam for 30 seconds.

The product obtained is then unmolded and presents an average apparent density of 0.654g/cm3 and a mouthfeel similar to that of gelled custard.

## EXAMPLE 3: FORMULATION FROM MANGOS RESULTING IN A PRODUCT ACCORDING TO THE INVENTION

The preparation is made by mixing the following ingredients:

- 200 g pureed mangos;
- 100 g sugar;
- 1g pectin, or 0.333% total weight of the mixture.

The preparation is then placed in a chamber and subjected to a pressure of 12 bar of carbon dioxide. The pressure is maintained for 10 minutes, then the product is extruded into cubic molds (HxLxW = 50x50x50 mm), at atmospheric pressure, such that they are filled 2/3 of their volume. The molds are then placed in a convection oven for 10 minutes at 150°C.

The product obtained is then unmolded and presents an average apparent density of 0.394g/cm3. It is crunchy due to the relatively high particle size of the starting preparation.

## EXAMPLE 4: FORMULATION FROM BEETS RESULTING IN A PRODUCT ACCORDING TO THE INVENTION

The preparation is made by mixing the following ingredients:

- 200 g pureed red beets;
- 5 g water;
- 2 g of a mixture of four vegetable oils;
- 1 g fine salt;
- 0.5 g gellan, or 0.239% total weight of the mixture.

The preparation is blended in a mixer before being placed in a chamber and subjected to a pressure of 18 bar of nitrogen. The pressure is maintained for 10 minutes, then the product is extruded into cubic molds (HxLxW = 50x50x50 mm), at atmospheric pressure, such that they are filled 2/3 of their volume. The molds are then subjected to a 750-W microwave beam for 40 seconds.

The product obtained is then unmolded and presents an average apparent density of 0.310g/cm3 and a soft and very melt-in-the-mouth mouthfeel. The texture is comparable to that of the soft inner part of bread.

## EXAMPLE 5: FORMULATION FROM SWEET POTATOES RESULTING IN A PRODUCT ACCORDING TO THE INVENTION

The preparation is made by mixing the following ingredients:

- 200 g sweet potatoes;
- 100 g water;
- 10 g sugar;
- 2 g agar, or 0.637% total weight of the mixture ;
- 2 g carob gum, or 0.637% total weight of the mixture.

The preparation is then placed in a chamber and subjected to a pressure of 18 bar of nitrogen. The pressure is maintained for 10 minutes, then the product is extruded into cubic molds (HxLxW = 50x50x50 mm), at atmospheric pressure, such that they are filled 2/3 of their volume. The molds are then placed in a convection oven for 5 minutes at 150°C.

The product obtained is then unmolded and presents an average apparent density of 0.388g/cm3 and a soft and very melt-in-the-mouth mouthfeel. The texture is comparable to that of the soft inner part of bread.

## EXAMPLE 6: FORMULATION FROM OVERRIPE BANANAS RESULTING IN A PRODUCT ACCORDING TO THE INVENTION

The preparation is made by mixing the following ingredients:

- 500 g mashed overripe bananas;
- 180 g water;
- 80 g finely-ground almond meal;
- 15 g powdered egg white or 1.94% total weight of the mixture.

The preparation is then placed in a chamber and subjected to a pressure of 18 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then subjected to a 800-W microwave beam for 30 seconds.

The product obtained is then unmolded and presents an average apparent density of 0.330g/cm3 and a soft and very melt-in-the-mouth mouthfeel.

The product can also be dried in a convection oven at 60°C for 1 hour. The product then loses its soft character to become slightly crunchy.

## EXAMPLE 7: FORMULATION FROM CARAMELIZED POTATO PEELS RESULTING IN A PRODUCT ACCORDING TO THE INVENTION

The preparation is made by mixing the following ingredients:

- 215 g organic potato peels, caramelized in a pan with 10 g sugar and 5 g unsalted butter;
- 120 g water;
- 10 g powdered white almonds;
- 15 g superfine brown sugar;
- 18 g powdered egg white or 4.158% total weight of the mixture.

The preparation is finely mixed so as to obtain a homogeneous paste with no visible bits. The preparation is then placed in a chamber and subjected to a pressure of 18 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then subjected to a 750-W microwave beam for 20 seconds.

The product obtained is then unmolded and presents an average apparent density of 0.325g/cm3 and a soft and very melt-in-the-mouth mouthfeel. There is a definite taste of caramelized potatoes.

The product can also be dried in a convection oven at 60°C for 1 hour. The product then loses its soft character to become slightly crunchy.

### EXAMPLE 8: FORMULATION FROM RAW PEAS RESULTING IN A PRODUCT ACCORDING TO THE INVENTION

The preparation is made by mixing the following ingredients:

- 170 g of raw peas;
- 15 g cooked caramelized onions;
- 180 g water;
- 2 g white superfine sugar;
- 2 g sunflower oil;
- 0.5 g salt;
- 0.2 g pepper;
- 8 g powdered egg white or 2.12% total weight of the mixture.

The preparation is finely mixed so as to obtain a homogeneous paste with no visible bits. The preparation is then placed in a chamber and subjected to a pressure of 18 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then subjected to a 900-W microwave beam for 25 seconds.

The product obtained is then unmolded and presents an average apparent density of 0.340g/cm3 and a soft mouthfeel. The product has a strong raw pea flavor.

The product can also be dried in a convection oven at 60°C for 1 hour. The product then loses its soft character to become slightly crunchy.

### EXAMPLE 9: FORMULATION FROM BEEF STEW RESULTING IN A PRODUCT ACCORDING TO THE INVENTION

The following ingredients are mixed in a pan:

- 200 g beef;
- 250 g red wine;
- 2 bay leaves;
- 2 sprigs of thyme;
- 1 sprig of rosemary;
- 1 shallot;
- 1 garlic clove;
- 1 carrot;
- 4 g sunflower oil;
- 0.5 g salt;
- 0.2 g pepper;

The preparation is reduced over a low heat, before being roughly mixed so as to grind the meat to obtain a homogeneous paste with a slightly fibrous texture. 15 g powdered egg white or 5.74% total weight of the mixture is then added. The preparation is then placed in a chamber and subjected to a pressure of 10 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then subjected to a 750-W microwave beam for 30 seconds.

The product obtained is then unmolded and presents an average apparent density of 0.330g/cm3. The meat fibers are still present and introduce consistency to the soft texture of the mixture.

The product can also be dried in a convection oven at 60°C for 1 hour. The product then loses its soft character to become slightly crunchy.

### EXAMPLE 10: FORMULATION FROM SCALLOP BEARDS RESULTING IN A PRODUCT ACCORDING TO THE INVENTION

The following ingredients are mixed in a pan:

- 486 g cleaned scallop beards ;
- 15 g unsalted butter.

The preparation is reduced over a low heat. 125 g cooked beards are removed, to which the following products are added:

- 175 g water used for deglazing the pan;
- 55 g semi-skimmed milk;
- 0.5 g salt;
- 12 g powdered egg white or 3.27% total weight of the mixture.

The preparation is finely mixed so as to obtain a homogeneous paste with no visible bits. The preparation is then placed in a chamber and subjected to a pressure of 6 bar of carbon dioxide. The pressure is maintained for 10 minutes, then the product is extruded into cubic molds (HxLxW = 50x50x50 mm), at atmospheric pressure, such that they are filled 2/3 of their volume. The molds are then subjected to a 750-W microwave beam for 30 seconds.

The product obtained is then unmolded and presents an average apparent density of 0.342g/cm3 and a soft and very melt-in-the-mouth mouthfeel. The cooked scallop beard brings crunchiness to the preparation, discovered when tasting.

The product can also be dried in a convection oven at 60°C for 1 hour. The product then loses its soft character to become slightly crunchy.

## EXAMPLE 11: FORMULATION FROM BUTTON MUSHROOMS RESULTING IN A PRODUCT ACCORDING TO THE INVENTION

The following ingredients are mixed in a pan:

- 280 g sliced button mushrooms;
- 5 g garlic;
- 2 g olive oil.

The preparation is reduced over a low heat. 180 g cooked mushrooms are removed, to which the following products are added:

- 190 g water used for deglazing the pan;
- 2 g olive oil ;
- 0.3 g salt;
- 0.1 g parsley;
- 12 g powdered egg white or 3.12% total weight of the mixture.

The preparation is finely mixed so as to obtain a homogeneous paste with no visible bits. The preparation is then placed in a chamber and subjected to a pressure of 18 bar of dinitrogen oxide. The pressure is maintained for 10 minutes, then the product is extruded into cubic molds (HxLxW = 50x50x50 mm), at atmospheric pressure, such that they are filled 2/3 of their volume. The molds are then subjected to a 750-W microwave beam for 30 seconds.

The product obtained is then unmolded and presents an average apparent density of $0.325 g/cm^3$ and a soft and very melt-in-the-mouth mouthfeel.

The product can also be dried in a convection oven at 60°C for 1 hour. The product then loses its soft character to become slightly crunchy.

The examples above are not intended to be exhaustive and intend to show the scope of the field of application of the method according to the invention. In fact, the invention deals with typologies of raw materials and quite varied preparations. In particular, very good products, in regards to both their shape and their organoleptic properties, are obtained from food processing co-products or "waste," such as, for example, cakes from oil extraction and overripe fruits and vegetables. All the products obtained present a density of less than $0.4 g/cm^3$, which gives them a very light and melt-in-the-mouth texture.

## Claims

1. A method for texturing food and/or nutraceutical products of the "sponge cake" or "solid foam" type comprising at least:

    (a) Transformation by controlled grinding of a preparation of at least one food, able to preserve the desired organoleptic properties, able to obtain a ground material, wherein the ground material is a liquid or paste with a particle size of less than 5 mm,
    (b) Addition of a structure molecule at an inactive state to said ground material to obtain a mixture, wherein the structure molecule is chosen from among the group comprising the following constituents: Egg white, albumin, ovalbumin, agar, pectin, gellan, carob gum or a mixture of at least two of said constituents,
    (c) Pressurization of the mixture obtained in step (b) by the incorporation of dissolved gas into said mixture,
    (d) Mechanical expansion n obtained by reducing the pressure of the mixture obtained in step (c), wherein the mechanical expansion is achieved by reducing the pressure by at least 6 bar, preferably between 6 and 20 bar, preferably between 10 and 18 bar,
    (e) Activation of the structure molecule,

    **characterized in that** the structure molecule activation is a thermal activation configured to obtain a core temperature of said mixture of between 60 °C and 150 °C, and the time for activating the structure molecule in step (e) is less than 5 minutes, the activated structure molecule thereby providing a structured network within said mixture set in shape, which results in a product having a density less than 0.4 $g/cm^3$.

2. The method for texturing food and/or nutraceutical products of the "sponge cake" or "solid foam" type according to one of claim 1, wherein said gas is chosen from among the group comprising: $N_2O$, $N_2$, $CO_2$, or a mixture of at least two of said gases.

3. The method for texturing food and/or nutraceutical products of the "sponge cake" or "solid foam" type according to one of claims 1 to 2, wherein the thermal activation of the structure molecule is a able to obtain a core temperature of said mixture of between 80 °C and 100 °C.

4. The method for texturing food and/or nutraceutical products of the "sponge cake" or "solid foam" type according to claim 3, wherein the thermal activation is carried out by microwave or infrared radiation.

5. The method for texturing food and/or nutraceutical products of the "sponge cake" or "solid foam" type according to one of claims 1 to 4, wherein a dehydration step is performed after the step (e) of activating the structure molecule, so as to obtain a crunchy texture.

6. The method for texturing food and/or nutraceutical products of the "sponge cake" or "solid foam" type according to one of claims 1 to 5, in which the time for activating the structure molecule in step (e) is less than 1 minute, or even less than 30 seconds.

**Patentansprüche**

1. Verfahren zum Texturieren von Lebensmitteln und/oder funktionellen Lebensmittelprodukten vom Typ "Biskuitkuchen" oder "fester Schaum", umfassend mindestens:

   (a) Umwandeln, durch kontrolliertes Mahlen, einer Zubereitung von mindestens einem Lebensmittel, wobei die gewünschten organoleptischen Eigenschaften erhalten werden können, wobei ein Mahlgut erhalten wird, wobei das Mahlgut eine Flüssigkeit oder Paste mit einer Partikelgröße von weniger als 5 mm ist,
   (b) Zugabe eines Strukturmoleküls in einem inaktiven Zustand zu dem Mahlgut, um eine Mischung zu erhalten, wobei das Strukturmolekül aus der Gruppe ausgewählt ist, umfassend die folgenden Bestandteile: Eiweiß, Albumin, Ovalbumin, Agar, Pektin, Gellan, Johannisbrotkernmehl oder eine Mischung aus mindestens zwei dieser Bestandteile,
   (c) Druckbeaufschlagung der in Schritt (b) erhaltenen Mischung durch Einbringen von gelöstem Gas in die Mischung,
   (d) Mechanische Expansion, die durch Reduzieren des Drucks der in Schritt (c) erhaltenen Mischung erreicht wird, wobei die mechanische Expansion durch Reduzieren des Drucks um mindestens 6 bar, vorzugsweise zwischen 6 und 20 bar, vorzugsweise zwischen 10 und 18 bar erreicht wird,
   (e) Aktivierung des Strukturmoleküls,

   **dadurch gekennzeichnet, dass** die Aktivierung des Strukturmoleküls eine thermische Aktivierung ist, die konfiguriert ist, um eine Kerntemperatur der Mischung zwischen 60 °C und 150 °C zu erhalten, und die Zeit zum Aktivieren des Strukturmoleküls in Schritt (e) weniger als 5 Minuten beträgt, wobei das aktivierte Strukturmolekül dadurch ein strukturiertes Netz innerhalb der in eine Form gesetzte Mischung bereitstellt, was zu einem Produkt führt, das eine Dichte von weniger als 0,4 g/cm$^3$ aufweist.

2. Verfahren zum Texturieren von Lebensmitteln und/oder funktionellen Lebensmittelprodukten vom Typ "Biskuitkuchen" oder "fester Schaum" nach Anspruch 1, wobei das Gas aus der Gruppe ausgewählt ist, umfassend: $N_2O$, $N_2$, $CO_2$ oder ein Gemisch aus mindestens zwei dieser Gase.

3. Verfahren zum Texturieren von Lebensmitteln und/oder funktionellen Lebensmittelprodukten vom Typ "Biskuitkuchen" oder "fester Schaum" nach einem der Ansprüche 1 bis 2, wobei die thermische Aktivierung des Strukturmoleküls eine Kerntemperatur der Mischung zwischen 80 °C und 100 °C erreichen kann.

4. Verfahren zum Texturieren von Lebensmitteln und/oder funktionellen Lebensmittelprodukten vom Typ "Biskuitkuchen" oder "fester Schaum" nach Anspruch 3, wobei die thermische Aktivierung durch Mikrowellen- oder Infrarotstrahlung ausgeführt wird.

5. Verfahren zum Texturieren von Lebensmitteln und/oder funktionellen Lebensmittelprodukten vom Typ "Biskuitkuchen" oder "fester Schaum" nach einem der Ansprüche 1 bis 4, wobei ein Dehydratisierungsschritt nach dem Schritt (e) des Aktivierens des Strukturmoleküls durchgeführt wird, um eine knusprige Textur zu erhalten.

6. Verfahren zum Texturieren von Lebensmitteln und/oder funktionellen Lebensmittelprodukten vom Typ "Biskuitkuchen" oder "fester Schaum" nach einem der Ansprüche 1 bis 5, bei dem die Zeit zum Aktivieren des Strukturmoleküls in Schritt (e) weniger als 1 Minute oder sogar weniger als 30 Sekunden beträgt.

**Revendications**

1. Procédé destiné à la texturation de produits alimentaires et/ou nutraceutiques du type « génoise » ou « mousse solide » comprenant au moins :

   (a) la transformation par broyage commandé d'une préparation d'au moins un aliment, permettant de préserver les propriétés organoleptiques souhaitées, permettant d'obtenir un matériau broyé, dans lequel le matériau broyé est un liquide ou une pâte avec une taille de particules inférieure à 5 mm,
   (b) l'ajout d'une molécule de structure dans un état inactif audit matériau broyé pour obtenir un mélange, dans lequel la molécule de structure est choisie parmi le groupe comprenant les constituants suivants : blanc d'oeuf, albumine, ovalbumine, agar-agar, pectine, gellane, gomme de caroube ou un mélange d'au moins deux desdits constituants,
   (c) la mise sous pression du mélange obtenu à l'étape (b) par l'incorporation de gaz dissous dans ledit mélange,
   (d) l'expansion mécanique n obtenue en réduisant la pression du mélange obtenu à l'étape (c), dans lequel l'expansion mécanique est réalisée en réduisant la pression d'au moins 6 bar, de préférence entre 6 et 20 bar, de préférence entre 10 et 18 bar,
(e) l'activation de la molécule de structure,

**caractérisé en ce que** l'activation de molécule de structure est une activation thermique conçue pour obtenir une température à coeur dudit mélange comprise entre 60 °C et 150 °C, et le temps pour l'activation de la molécule de structure à l'étape (e) est inférieur à 5 minutes, la molécule de structure activée fournissant de ce fait un réseau structuré au sein dudit mélange mis en forme, qui résulte en un produit ayant une masse volumique inférieure à 0,4 g/cm$^3$.

2. Procédé destiné à la texturation de produits alimentaires et/ou nutraceutiques du type « génoise » ou « mousse solide » selon la revendication 1, dans lequel ledit gaz est choisi parmi le groupe comprenant : $N_2O$, $N_2$, $CO_2$, ou un mélange d'au moins deux desdits gaz.

3. Procédé destiné à la texturation de produits alimentaires et/ou nutraceutiques du type « génoise » ou « mousse solide » selon l'une des revendications 1 à 2, dans lequel l'activation thermique de la molécule de structure permet d'obtenir une température à coeur dudit mélange comprise entre 80 °C et 100 °C.

4. Procédé destiné à la texturation de produits alimentaires et/ou nutraceutiques du type « génoise » ou « mousse solide » selon la revendication 3, dans lequel l'activation thermique est effectuée par micro-ondes ou par rayonnement infrarouge.

5. Procédé destiné à la texturation de produits alimentaires et/ou nutraceutiques du type « génoise » ou « mousse solide » selon l'une des revendications 1 à 4, dans lequel une étape de déshydratation est mise en oeuvre après l'étape (e) d'activation de la molécule de structure, de façon à obtenir une texture croquante.

6. Procédé destiné à la texturation de produits alimentaires et/ou nutraceutiques du type « génoise » ou « mousse solide » selon l'une des revendications 1 à 5, dans lequel le temps pour l'activation de la molécule de structure à l'étape (e) est inférieur à 1 minute, ou même inférieur à 30 secondes.

Figure 1

# Figure 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2360264

- US 5229157 A